# EUROPEAN PATENT APPLICATION

(11) **EP 0 821 249 A2**
(43) Date of publication of application: **28.01.1998**
(21) Application number: 97305548.6
(22) Date of filing: 24.07.1997
(51) Int. Cl.: G02B 6/06, G02B 6/08, G01B 11/00, G06K 9/00

(54) **Fiber optic device, light receiving member, and pattern acquisition apparatus**

(30) Priority: 24.07.1996 JP 195077/96
(71) Applicant: HAMAMATSU PHOTONICS K.K., Shizuoka-ken (JP)
(72) Inventor: Sugawara, Takeo, Hamamatsu-shi, Shizuoka-ken (JP)
(74) Representative: Whitten, George Alan

(57) **Abstract**

The fiber optic device (10) in accordance with the present invention comprises cores (32) extending in a predetermined direction and a light absorber (34) surrounding the cores (32). Opposite end faces of the cores and light absorber (32, 34) are respectively collected to become flush with each other to form input and output end faces (22, 24) of the device (10). The input end face (22) is inclined with respect to an axis (38) of each of the cores (32) at a predetermined angle. In this device, an irregularity pattern of a surface of an object in close contact with the input end face (22) can be transmitted through the device (10) and emitted from the output end face (24) with a high contrast.

## Description

### BACKGROUND OF THE INVENTION

### Field of the Invention

The present invention relates to a fiber optic device used for a pattern acquisition apparatus such as a fingerprint detecting apparatus.

### Related Background Art

There has conventionally been known a fiber optic device in which a plurality of unit fibers are bundled together in parallel to each other. In particular, Japanese Patent Application Laid-Open No. 4-313737, which is incorporated herein by reference, discloses a fiber optic device in which each unit fiber consists only of a core and a light absorber surrounding the core without a cladding. The respective end faces of the unit fibers perpendicular to the respective core axes are collected so as to become flush with each other to form opposite end faces of the device. These end faces are respectively faces to receive and to emit an optical image.

In such a fiber optic device, light rays incident on each core at an incident angle not smaller than a certain value are absorbed by the light absorber. Therefore, only the light rays incident on the input end face substantially perpendicularly thereto can be extracted, while the unnecessary light rays obliquely incident on the input end face, such as the light rays scattered by a liquid crystal layer in an example of the above-mentioned publication, can be blocked. Accordingly, this fiber optic device emits a high contrast image when it is set so that the image to be transmitted enters the input end face in parallel to each core axis, i.e., enters the face in a direction perpendicular thereto.

The above-mentioned device, however, is not always suitable to be utilized in an apparatus for acquiring an irregularity pattern of an object's surface, such as a fingerprint detecting apparatus. A typical irregularity pattern acquisition apparatus acquires the surface pattern of the object's surface in close contact with the input end face of the above device by irradiating the object with light rays from therearound. Upon this irradiation, the light rays through depressed and protruded portions of the object are incident on the input end face of the device at various angle. Accordingly, the device, which simply extracts the light rays perpendicularly incident on the input end face, blocks the light rays emitted from the depressed portions and those emitted from the protruded portions similarly. Thereby, the irregularity pattern image may not be obtained with a very high contrast.

### SUMMARY OF THE INVENTION

It is an object of the present invention to provide a fiber optic device which can emit an irregularity pattern image of an object's surface with a high contrast.

In order to achieve the above-mentioned object, the fiber optic device in accordance with the present invention comprises a plurality of cores substantially in parallel to each other extending in a predetermined direction, and a light absorber which surrounds the side face of each of the cores and has an absorption coefficient greater than that of each of the cores with respect to at least one wavelength of light. Opposite end faces of the cores and the light absorber are respectively collected so as to become flush with each other, thereby forming input and output end faces of this device. This input end face is inclined with respect to each core axis at a predetermined angle α.

Assuming that the refractive index of the air is nₐ and that the refractive index of each core is n_{core}, the angle of inclination α preferably satisfies a relationship of α ≤ 90° - sin⁻¹ (nₐ/n_{core}). In this case, light rays incident on each core from the air advance in a direction deviating from its core axis, thereby being absorbed by the light absorber to be attenuated or removed. Accordingly, in the fiber optic device of the present invention, an irregularity pattern of a surface of an object in close contact with the input end face can be transmitted through the device with a high contrast and then be emitted from the output end face.

The output end face of the fiber optic device in the present invention may be substantially perpendicular to each core axis. In this configuration, the light rays advancing through each core along its axis are emitted from the output end face in a direction perpendicular thereto. Accordingly, when the output end face of the device opposes a light receiving surface of a photodetector, the rays emitted from the output end face can securely enter the light receiving area of the photodetector. As a result, the S/N in the output of the photodetector can be increased, which enables the detection of the pattern of the object's surface with a high resolution. Also, since the light rays are emitted from the output end face in a direction perpendicular thereto, the rays can be emitted from the output end face regardless of the medium adjacent to this end face. This enables a wider range of application of the device.

The input and output end faces of the device may be substantially in parallel to each other. In this configuration, an optical image entering on the input end face can be emitted from the output end face with substantially no distortion, and the device can be made compact.

In accordance with another aspect of the present invention, provided is a light receiving member comprising the above-mentioned fiber optic device and a photodetector which converts an optical image incident on its light receiving surface into an electric signal and outputs this electric signal. Here, the photodetector is disposed so that an optical image emitted from the output end face of the device enters the light receiving surface.

In accordance with still another aspect of the present invention, provided is a pattern acquisition apparatus comprising the above light receiving member and a light source for illuminating the input end face of the device included in the light receiving member.

The present invention will be more fully understood from the detailed description given hereinbelow and the accompanying drawings, which are given by way of illustration only and are not to be considered as limiting the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will be apparent to those skilled in the art from this detailed description.

### BRIEF DESCRIPTION OF THE DRAWINGS

Fig. 1 is an overall perspective view showing a fiber optic device in accordance with one embodiment of the present invention;
Fig. 2 is a partially vertical sectional view of the fiber optic device taken along line II-II of Fig. 1;
Fig. 3 is a partially transverse sectional view of the fiber optic device taken along line III-III of Fig. 2;
Fig. 4 is a spectrum showing spectral transmittance of a black glass constituting a light absorber in the device shown in fig. 1;
Fig. 5 is a partially enlarged vertical sectional view of the device in a case where the angle of inclination of its input end face is equal to the maximum angle of inclination;
Fig. 6 is a graph showing a relationship between the refractive index of each core and the maximum angle of inclination αₘ of the input end face;
Fig. 7 is a partially enlarged vertical sectional view of the device shown in fig. 1, where a finger is in close contact with the input end face;
Fig. 8 is a schematic view showing a light receiving member in which the device shown in fig. 1 is attached to a CCD imaging device;
Fig. 9 is a schematic view showing a configuration of a fingerprint acquisition apparatus comprising the light receiving member shown in Fig. 8;
Fig. 10 is an overall perspective view showing a fiber optic device in accordance with another embodiment of the present invention;
Fig. 11 is a partially vertical sectional view of the fiber optic device taken along line XI-XI of Fig. 10.

### DESCRIPTION OF THE PREFERRED EMBODIMENTS

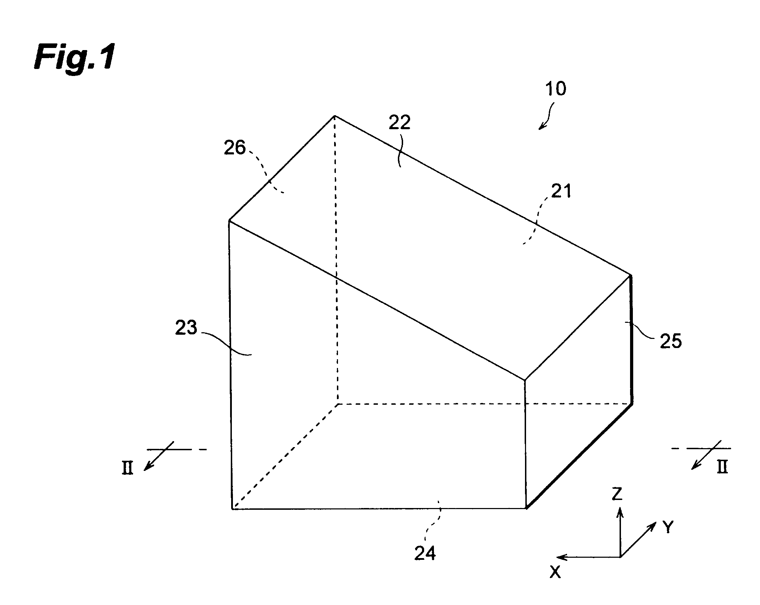

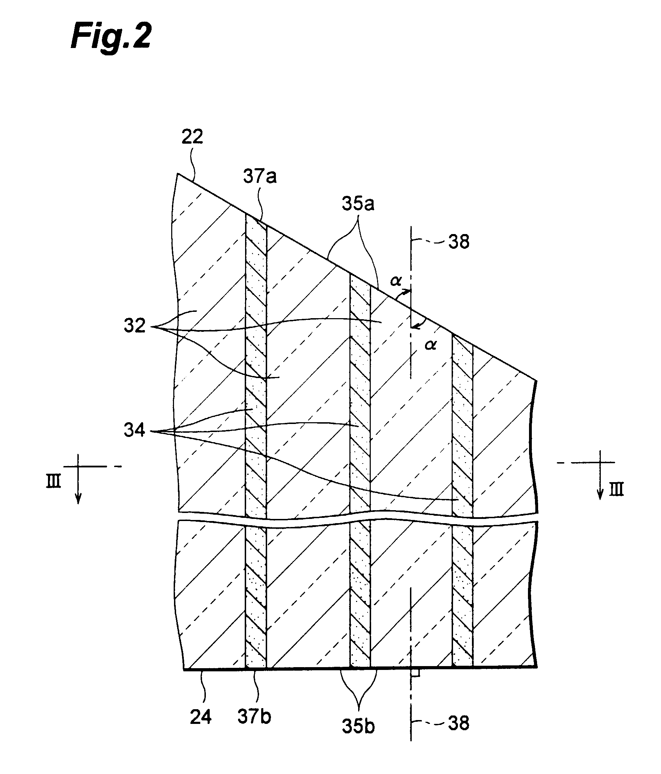

Figs. 1 to 3 are views showing a configuration of a fiber optic device in accordance with one embodiment of the present invention. Namely, Figs. 1 to 3 respectively are an overall perspective view of the fiber optic device, a partially vertical sectional view of the fiber optic device taken along line II-II of Fig. 1, a partially transverse sectional view of the fiber optic device taken along line III-III of Fig. 2. For the convenience of explanation, Fig. 1 also shows an XYZ rectangular coordinate system.

As shown in Fig. 1, the fiber optic device 10 is a hexahedron comprising rectangular side faces 22, 24, 25, and 26 and trapezoidal side faces 21 and 23. The device 10 is formed like a trapezoidal prism extending in the Y-axis direction in Fig. 1, in which the side faces 21 and 23 within ZX planes serve as upper and lower faces, respectively.

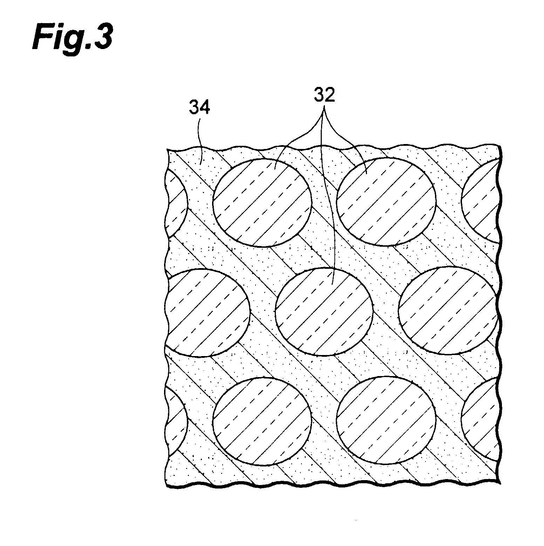

With reference to Figs. 2 and 3, the configuration of the fiber optic device 10 will be explained. The device 10 comprises a plurality of rod-shaped cores 32 which serve as light transmitting portions. These cores 32 extend so that their respective axes 38 become substantially in parallel to each other with substantially uniform intervals. Each core 32 has a circular cross-section perpendicular to its axis 38. As shown in Fig. 2, an end face 35a of each core 32 is not orthogonal to the axis 38 but inclined with respect thereto at an angle α. This angle of inclination α is defined as a clockwise angle taken from an orthogonal projection of each core axis 38 onto the core end face 35a to the axis 38 in Fig. 2. By contrast, an end face 35b of each core 32 opposite to the end face 35a is orthogonal to each axis 38.

The side face of each core 32 is closely surrounded by a light absorber 34. The light absorber 34 is constituted by a material exhibiting an absorption coefficient greater than that of the material of each core 32 in the whole visible light region. The light absorber 34 intervenes between the cores 32 while extending in the same direction as the cores 32. As with the end faces 35a and 35b of each core 32, opposite end faces 37a and 37b of the light absorber 34 are substantially in parallel to each other, while inclining with respect to each core axis 38 at the predetermined angle α. The end faces 35a and 37a, and the end faces 35b and 37b are collected so as to substantially become flush with each other, respectively, thereby forming the side faces 22 and 24 of the device 10.

Thus, the fiber optic device 10 has a structure in which the cores 32 and the light absorber 34 extend in a specific direction, while the side faces 22 and 24 respectively form opposite end faces of the device 10. The end faces 22 and 24 respectively serve as faces to receive and to emit an optical image when the fiber optic device 10 is used as optical image transmitting means. Consequently, the faces 22 and 24 will respectively be referred to as input and output end faces of the device 10 in the following.

The cores 32 and light absorber 34 can be constituted by any material which has conventionally been used for forming typical fiber optic devices. For instance, examples of composition for the light absorber are disclosed in U.S. Patent No. 3,797,910 issued Mar.19, 1974, which is incorporated herein by reference. A glass-type light absorber used in general contains various coloring oxides such as NiO, Co₂O₃, CuO, Fe₂O₃, and MnO₂. Compositions of the cores 32 and light absorber 34 in accordance with this embodiment are shown in the following table.

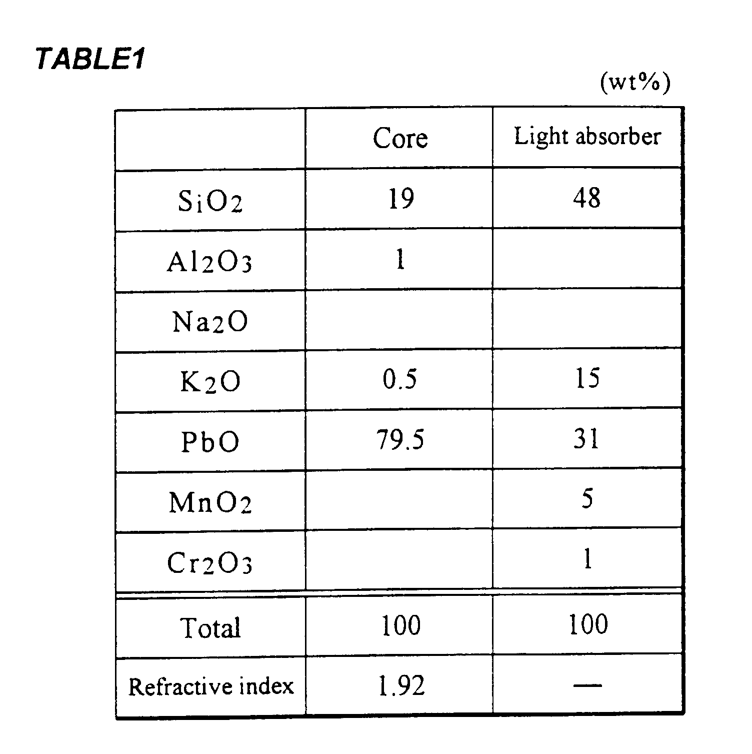

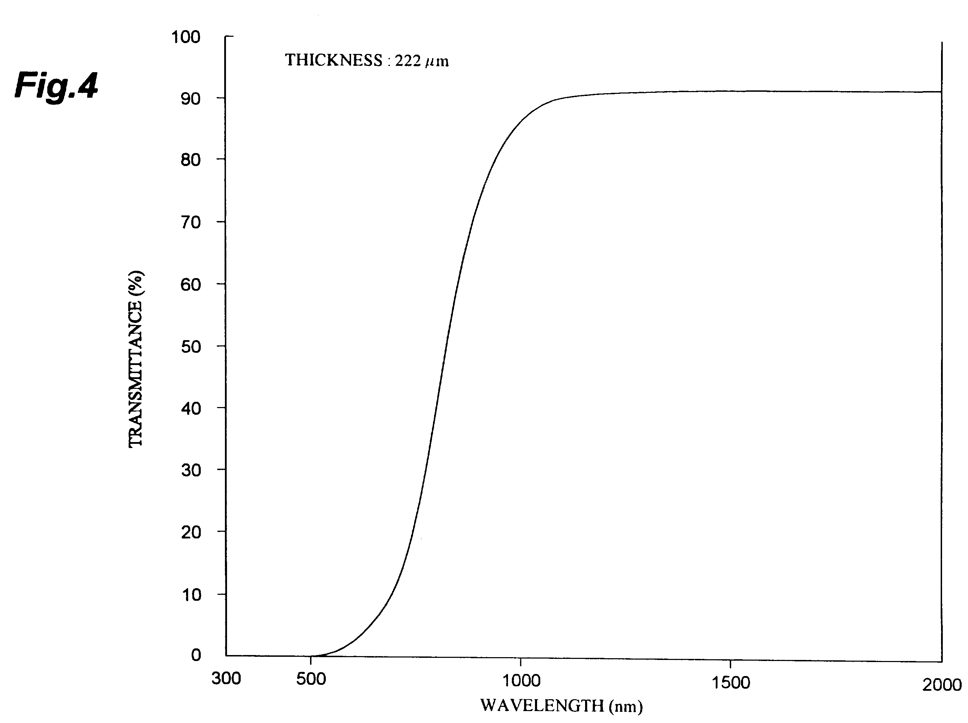

As shown in this table, each core 32 is constituted by a transparent glass composed of SiO₂, Al₂O, K₂O, and PbO has a refractive index of 1.92. On the other hand, the light absorber 34 is a black glass composed of SiO₂, K₂O, PbO, MnO₂, and Cr₂O₃. Fig. 4 shows a spectrum of spectral transmittance of this black glass in the case where its thickness is 222 µm.

As most clearly shown in Fig. 2, since the end face 35a of each core 32 is inclined with respect to each core axis 38 at the angle α, the input end face 22 including the end faces 35a is also inclined with respect to each axis 38 at the angle α. In this embodiment, the angle of inclination α is set to an angle not greater than a predetermined maximum angle of inclination αₘ so that light rays incident on each core 32 from the air advance in a direction deviating from the direction in which the axis 38 of each core 32 extends.

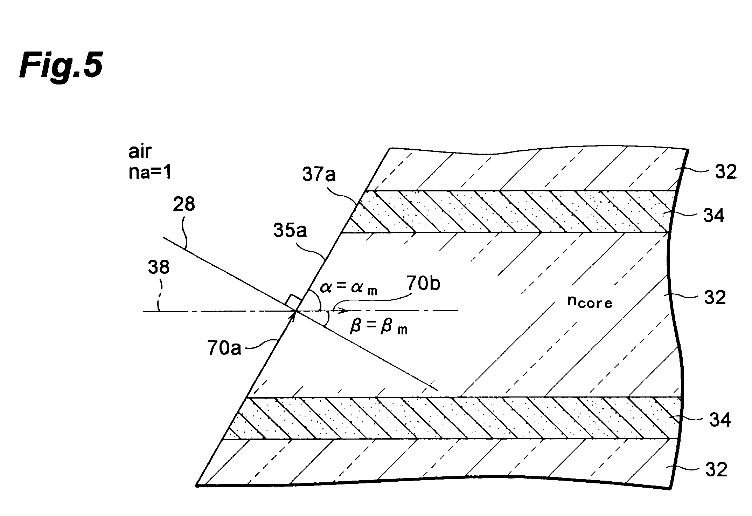

Fig. 5 is a partially enlarged vertical sectional view of the fiber optic device 10 in the case where the angle of inclination α is equal to the maximum angle of inclination αₘ. In Fig. 5, n_{core} and nₐ refer to the refractive indices of each core 32 and the air, respectively. Referred to with 70a is a light ray incident on one of the end faces 35a of the cores 32 at an incident angle of 90°; 70b is a refracted ray of the incident ray 70a in the core 32; and β is an angle between the refracted ray 70b and a normal 28 of the end face 35a, that is, angle of refraction. In Fig. 5, an angle of refraction β corresponds to the maximum angle of inclination αₘ , and is represented as βₘ.

As shown in Fig. 5, the maximum angle of inclination αₘ is an angle of inclination at which light rays incident on each core 32 with an incident angle of 90°, such as ray 70a, advance therethrough along each axis 38. This angle αₘ can be determined from the following two equations:${\text{n}}_{\text{a}} {\text{· sin 90° = n}}_{\text{core}} {\text{· sin β}}_{\text{m}}$${\text{α}}_{\text{m}} {\text{+ β}}_{\text{m}} \text{= 90°}$ When these two equations are solved, we obtain 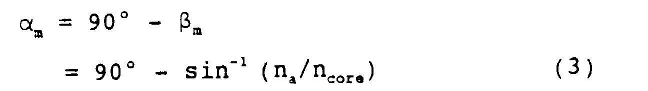 Assuming that nₐ = 1, the above equation can be represented as:${\text{α}}_{\text{m}} {\text{= 90° - sin}}^{\text{-1}} {\text{(1/n}}_{\text{core}} \text{)}$

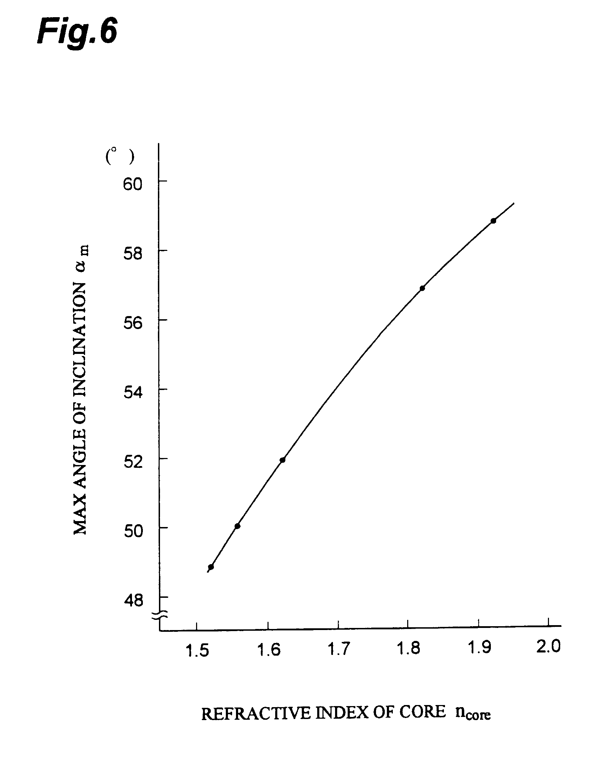

Fig. 6 is a graph showing a relationship between the refractive index n_{core} and the angle αₘ according to the above equation (4). As can be seen from this graph, the higher the refractive index of the core 32 is, the greater the maximum angle of inclination becomes.

When the angle of inclination α of the end face 35a is equal to the above-mentioned maximum angle of inclination αₘ, each of the light rays incident on the cores 32 from the air at an incident angle smaller than 90° has an angle of refraction smaller than βₘ. The refracted rays having such an angle of refraction advance in a direction deviating from the axial direction of each core 32 toward an interface between each core 32 and the light absorber 34, so as to be attenuated or removed as being absorbed by the light absorber 34. When the angle α is smaller than the angle αₘ, all the incident rays incident on the cores 32 from the air at an incident angle not greater than 90° have an angle of refraction smaller than βₘ to advance in a direction deviating from the axial direction of each core 32. This means that the rays incident on the cores 32 from the air at any incident angle are absorbed by the light absorber 34 to be attenuated or removed. Consequently, when the angle of inclination α is not greater than the maximum angle of inclination αₘ, the rays entering the cores 32 from the air through the respective end faces 35a can substantially be prevented from propagating through the cores 32.

In this embodiment, the refractive index of each core 32 is 1.92, and the value of the angle αₘ corresponding thereto is 58.6°. In this embodiment, the angle of inclination α is set to this value.

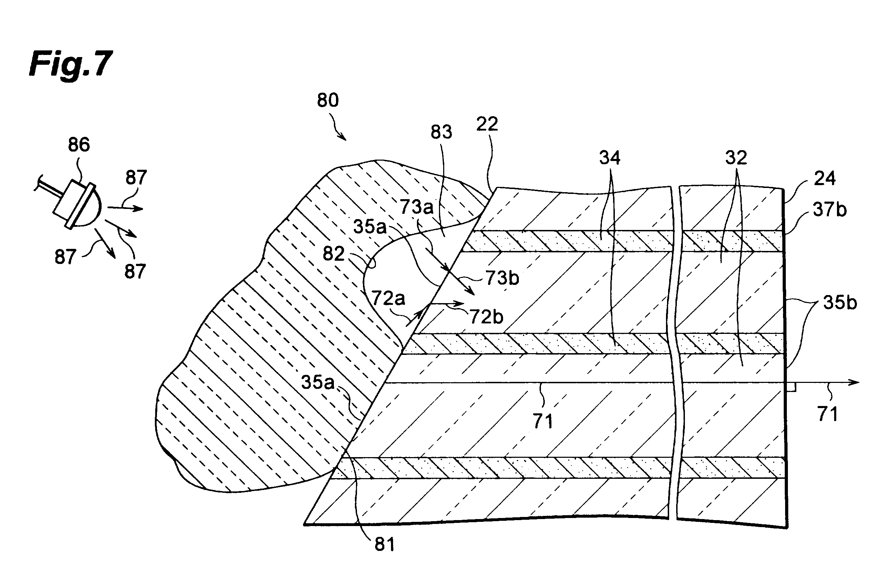

Fig. 7 is a partially enlarged vertical sectional view showing an interior configuration of the device 10 near the input end face 22. In this figure, a finger 80, which is an example of an object to be detected, is in close contact with the input end face 22 and is irradiated with rays 87 from therebehind by means of a light source 86. Formed according to the structure of irregularities in the fingerprint are regions where the core end faces 35a are in close contact with protruded portions 81 of the finger 80, and regions where the end faces 35a and depressed portions 82 of the finger 80 are separated from each other by air gaps 83. Some of the rays 87 from the light source 86, such as rays 72a and 73a, are transmitted through the finger 80 and emitted from the depressed portions 82 to advance through the gaps 83 and enter the cores 32 through their respective end faces 35a. As mentioned above, the refracted rays 72b and 73b of such rays 72a and 73a advance through one of the cores 32 in an direction deviating from the axial direction of the core 32 to be attenuated or removed by the light absorber 34. By contrast, in the regions where the protruded portions 81 and the core end faces 35a are in close contact with each other, the relationship between the incident angle and the angle of refraction at the end faces 35a changes from that in the noncontact region. This is because the refractive index of the finger 80 is greater than that of the air. Consequently, in the rays entering the cores 32 after being transmitted through the protruded portions 81, there exist rays, such as a ray 71 in Fig. 7, advancing in the axial direction of each core 32. Such rays propagate through the cores 32 without being absorbed by the light absorber 34 and reach the end faces 35b opposite to the end faces 35a.

Thus, in the fiber optic device 10, substantially only the light rays incident on the cores 32 from the protruded portions 81 of the object's surface in close contact with the input end face 22 can reach the output end face 24. The rays entering the cores 32 from the depressed portions 82 of the object's surface after being transmitted through the gaps 83 are attenuated to be substantially extinguished, during its propagating process, as being absorbed by the light absorber 34. Consequently, a light and dark image corresponding to irregularities of the object's surface, i.e., irregularity pattern image of the object's surface, may be transmitted with a high contrast by the device 10 to be emitted to the outside thereof. Also, since the device 10 can emit only the light rays advancing through each core 32 along its axis 38, the light beam emitted from each core 32 hardly diverges. Accordingly, the fiber optic device 10 in accordance with this embodiment has a high positional resolution.

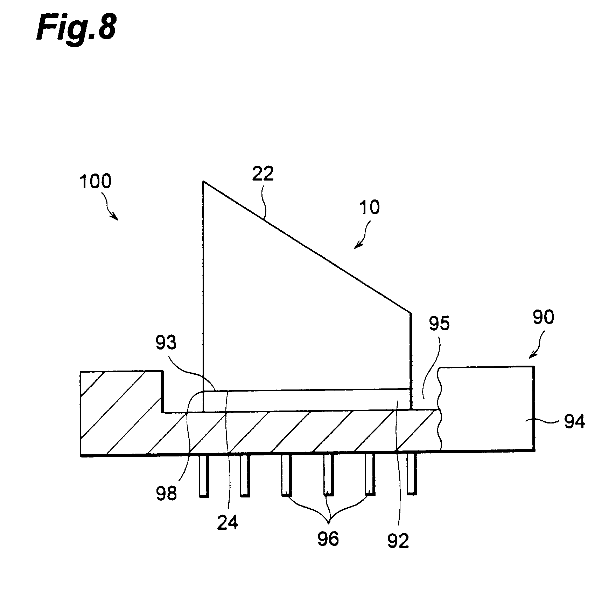

Fig. 8 is a schematic view showing a light receiving member 100 in which the fiber optic device 10 is attached to a CCD imaging device 90, which is an example of a photodetector. This imaging device 90 comprises a CCD chip 92 disposed within a depression 95 of a housing 94. The imaging device 90 converts, upon photoelectric conversion, an optical image incident on a light receiving surface 93 of the CCD chip 92 into an electric signal. This electric signal is outputted by way of lead terminals 96 extending through the housing 94 to the outside. The output end face 24 of the device 10 is bonded to the light receiving surface 93 by means of an optical adhesive 98. Any of balsams, epoxy resin adhesives, ultraviolet curing resins, and the like can be used as the optical adhesive 98. In this embodiment, well-known Cemedine-1565 is used as the adhesive 98.

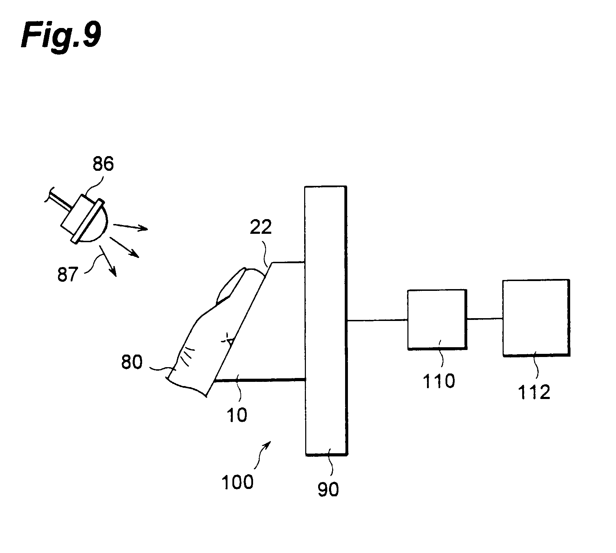

This light receiving member 100 can be used in an apparatus for acquiring the irregularity pattern on the surface of an object, such as fingerprint. Fig. 9 is a schematic view showing a configuration of a fingerprint acquisition apparatus using the light receiving member 100. In addition to the light receiving member 100, this fingerprint acquisition apparatus further comprises the light source 86 for illuminating the input end face 22 of the light receiving member 100, a signal processing unit 110 electrically connected to the lead terminals 96 of the light receiving member 100, and a display 112 electrically connected to the signal processing unit 110. When the finger 80 is pushed onto the input end face 22 so as to come into close contact with this end face and then is irradiated with rays 87 from the light source 86, a fingerprint pattern optical image enters the fiber optic device 10 through the input end face 22. This fingerprint pattern image is transmitted to the output end face 24 and then emitted therefrom to enter the light receiving surface 93 of the CCD chip 92. Thereafter, the fingerprint pattern image of the finger 80 is converted into the electric signal to be fed into the signal processing unit 110. The unit 110 performs an appropriate processing based on the output from the CCD imaging device 90 and sends the resulting image signal to the display 112. Thus the fingerprint pattern image is displayed on a screen of the display 112.

In the fiber optic device 10 in accordance with this embodiment, since the output end face 24 is perpendicular to the axes 38 of the cores 32, the core-propagating light rays advancing through the cores 32 along the respective axes 38 are emitted from the output end face 24 in a direction perpendicular thereto. Consequently, the light rays emitted from the output end face 24 securely enter the light receiving area of the CCD imaging device 90. Also, as mentioned above, the device 10 has a high positional resolution. Accordingly, attaching this device 10 to the CCD imaging device 90 can increase the S/N in the output of the imaging device 90 and enable the detection of the irregularity pattern with a high resolution.

Since the fiber optic device 10 is configured so that the light rays are emitted perpendicularly to the output end face 24, the rays can be emitted from the output end face 24 regardless of the medium adjacent to this end face. This enables a wider range of application of the device 10. Though explained above is the case in which the fiber optic device 10 is secured to the CCD chip 92 by means of an optical adhesive, it should not be restricted to such a case. For example, the fiber optic device 10 and a photodetector may be separated from each other by the air, and a lens may be disposed therebetween so as to optically connect them together.

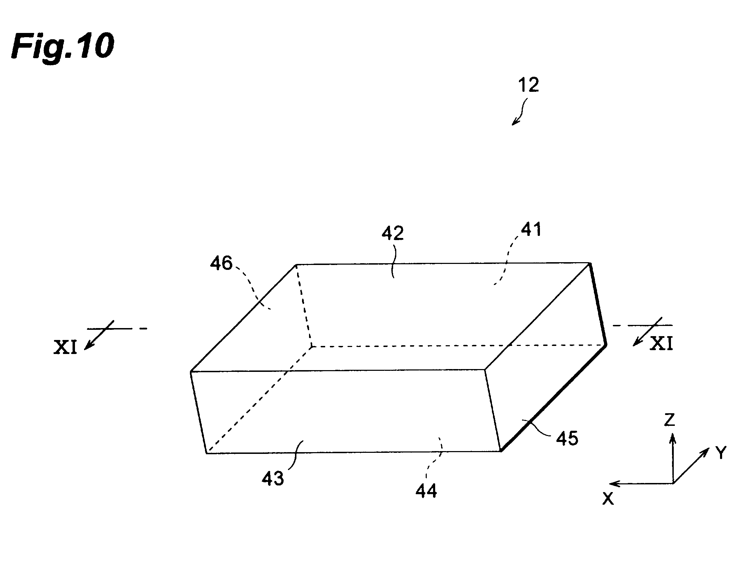

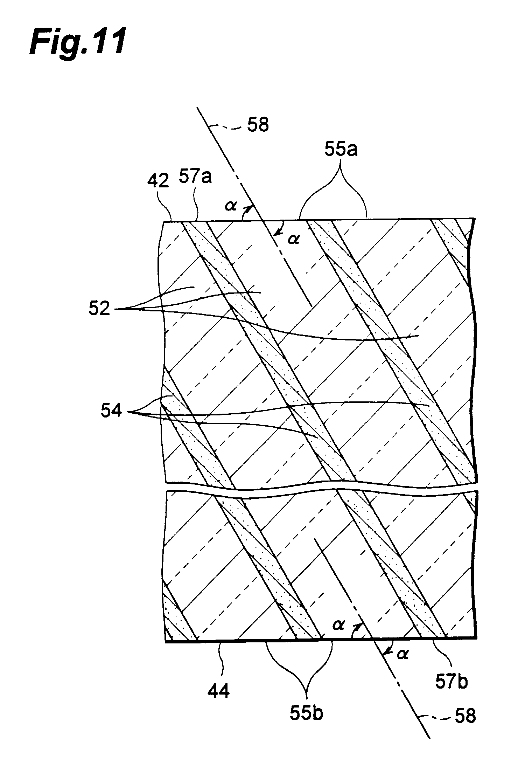

Fig. 10 and 11 are views showing a configuration of a fiber optic device in accordance with another embodiment of the present invention. Namely, Figs. 10 is an overall perspective view of the fiber optic device 12 of this embodiment, and Fig. 11 is a partially vertical sectional view of the device 12 taken along line XI-XI of Fig. 10. As shown in Fig. 10, the device 12 is a parallelepiped comprising rectangular side faces 42, 44, 45, and 46 and parallelogrammatic side faces 41 and 43. The device 12 is formed like a quadrangular prism extending in the Y-axis direction in Fig. 10, where the side faces 41 and 43 within ZX planes are upper and lower faces of the prism, respectively. The side faces 42 and 44 are both within XY planes and therefore in parallel to each other, having substantially the same area.

Referring to Fig. 11, as with the device 10 mentioned above, the fiber optic device 12 comprises a plurality of rod-shaped cores 52, which serve as light transmitting portions, extending so that their respective axes 58 become substantially in parallel to each other. These cores 52 are disposed so that their respective axes 58 are arranged with substantially uniform intervals. Unlike the above-mentioned device 10, opposite end faces 55a and 55b of each core 52 are substantially in parallel to each other, while inclining with respect to each axis 58 by a predetermined angle α. This angle of inclination α is defined as a clockwise angle taken from an orthogonal projection of each core axis 58 onto the core end face to the axis 58 in Fig. 11.

As with the above-mentioned device 10, the side face of each core 52 is closely surrounded by a light absorber 54, which intervenes between the cores 52 while extending in the same direction as the cores 52. As with the end faces 55a and 55b of each core 52, opposite end faces 57a and 57b of the light absorber 54 are substantially in parallel to each other, while inclining with respect to each core axis 58 at the angle α. The cores 52 and light absorber 54 are respectively constituted by the same materials as those of the cores 32 and light absorber 34 in the above device 10. The end faces 55a and 57a and end faces 55b and 57b are collected so as to substantially become flush with each other, respectively, thereby forming the side faces 42 and 44 of the device 12. As in the case of the device 10, these side faces 42 and 44 are respectively input and output end faces of the device 12.

As with the input end face 22 of the above-mentioned device 10, the angle of inclination α of each of the input and output end faces of the fiber optic device 12 is set to an angle at which the light rays incident on each core 52 from the air advance in a direction deviating from the axial direction of each core 52, i.e., an angle not greater than the maximum angle of inclination αₘ represented by the above expression (3). Accordingly, this device 12 can also transmit, with a high contrast, an irregularity pattern image of the surface of an object and then emit the image to the outside thereof. Also, in this fiber optic device 12, since the input and output end faces 42 and 44 are in parallel to each other, an optical image incident on the input end face 42 can be emitted from the output end face 44 with substantially no distortion. Further, as can easily be seen when Figs. 1 and 10 are compared with each other, the fact that the input and output end faces 42 and 44 are in parallel to each other makes the device 12 relatively compact.

As mentioned above, in the fiber optic device 12, the input and output end faces 42 and 44 are inclined at an angle where the light rays incident on each core 52 from the air advance in a direction deviating from the axial direction of the core. Therefore, conversely, when the medium adjacent to the output end face 44 is the air, only the rays advancing through each core 52 in a direction deviating from its axis 58 can be emitted from the output end face 44. Namely, when the medium adjacent to the output end face 44 is the air, the light rays propagating through each core 52 along the axis thereof are totally reflected at its end face 55b, thus failing to be emitted therethrough. Accordingly, in attachment of the device 12 to a photodetector such as the CCD imaging device 90 shown in fig. 8, it is preferred that a sealant is disposed between the output end face 44 and the light receiving surface 93 so that no air intervene therebetween. As the sealant, any material which has a translucency and can prevent the air from intervening between the output end face 44 and the light receiving surface 93 may be used. For example, refractive-index matching material such as matching oil, and the above-mentioned optical adhesive may be used.

From the invention thus described, it will be obvious that the invention may be varied in many ways. Such variations are not to be regarded as a departure from the spirit and scope of the invention, and all such modifications as would be obvious to one skilled in the art are intended for inclusion within the scope of the following claims.

The basic Japanese Application No. 195077/1996 filed on July 24, 1996 is incorporated herein by reference.

## Claims

1. A fiber optic device (10) comprising:
a plurality of cores (32) substantially in parallel to each other extending in a predetermined direction; and
a light absorber (34) which surrounds a side face of each of said cores (32) and has an absorption coefficient greater than that of each of said cores (32) with respect to at least one wavelength of light;
opposite end faces of said cores (32) and of said light absorber (34) being respectively collected to become flush with each other to form input and output end faces (22, 24) of said fiber optic device (10), the input end face (22) being inclined with respect to an axis (38) of each of said cores (32) at a predetermined angle a.

2. A fiber optic device (10) according to claim 1, wherein said angle α satisfies:${\text{α ≤ 90° - sin}}^{\text{-1}} {\text{(n}}_{\text{a}} {\text{/n}}_{\text{core}} \text{)}$ where nₐ is a refractive index of the air, and n_{core} is a refractive index of each of said cores (32).

3. A fiber optic device (10) according to claim 1, wherein said output end face (24) is perpendicular to said axis (38) of each of said cores (32).

4. A fiber optic device according to claim 1, wherein the input end face (22) and output end face (24) are substantially in parallel to each other.

5. A light receiving member (100) comprising:
the fiber optic device (10) according to claim 1; and
a photodetector (90) which converts an optical image incident on its light receiving surface (93) into an electric signal and outputs said electric signal, said photodetector (90) being disposed so that the optical image emitted from the output end face (24) of the fiber optic device (10) enters said light receiving surface (93).

6. A pattern acquisition apparatus comprising:
the light receiving member (100) according to claim 5; and
a light source (86) for illuminating the input end face (22) of the fiber optic device (10) included in said light receiving member (100).

7. A light transmitting device comprising:
an optical block having an entrance face, and a plurality of light transmitting regions embedded in a light absorbing medium which regions are arranged in parallel along a light transmitting axis the axis being angled with respect to the entrance face.

8. A light transmitting device having an optical axis and being arranged such that only light substantially parallel to the axis is transmitted through the device, the device having a light entrance face inclined at an acute angle to the optical axis.
